## Europäisches Patentamt
## European Patent Office
## Office européen des brevets

(11) Publication number: **0 020 005**
A1

# EUROPEAN PATENT APPLICATION

(21) Application number: **80301216.0**

(51) Int. Cl.³: **F 16 H 11/06, F 01 P 7/04**

(22) Date of filing: **15.04.80**

(30) Priority: **24.05.79 US 41856**

(43) Date of publication of application: **10.12.80**
**Bulletin 80/25**

(84) Designated Contracting States: **DE FR GB IT SE**

(71) Applicant: **FMC CORPORATION, 200 E. Randolph Drive, Chicago Illinois (US)**

(72) Inventor: **Avramidis, Stellios Antony, 1592 Dayhuff Road, Mooresville, Indiana (US)**
Inventor: **Partridge, William Trafford, rr 1 box 502, Plainfield, Indiana 46168 (US)**

(74) Representative: **Hind, Raymond Stenton et al, Mathisen, Macara & Co. Lyon House Lyon Road, Harrow, Middlesex, HA1 2ET (GB)**

(54) **Variable speed belt drive systems.**

(57) A variable speed belt drive system, for example for use as an accessoy drive for a motor vehicle, has an input shaft (42) connected to the engine and an output shaft (40) connected to an accessory. Power is transmitted from the input shaft (42) to the output shaft (40) though a variable pitch pulley (34) on the input shaft (42), an endless belt (38), and a variable pitch pulley (30) on the output shaft (40). A torqueresponsive mechanism (36) is connected to the input pulley (34) to decrease the diameter of the pulley (34) as the load increases. A speed-responsive mechanism (32) is connected to the output pulley (30) to increase the diameter of the pulley (30) as the speed of the output shaft (40) increases. The torque-responsive mechanism (36) is operated by a spring (126) acting both in compression and in torsion, and is effective to partially overcome the speed-responsive mechanism (32) when a high torque load is applied to the accessories thereby at least preventing high torque from causing a drop in speed of the accessories.

- 1 -

## VARIABLE SPEED BELT DRIVE SYSTEMS

The present invention relates to a variable speed belt drive system, and more particularly, but not exclusively, for such a drive system for use in driving accessories of a motor vehicle.

A typical automobile has many accessories (such as fan, water pump, air injection (AIR) pump, air conditioning compressor and the like) which receive their power from the engine. It has been recognized that, with a fixed ratio drive between the engine and accessories, the accessories are generally driven too slowly for efficient performance at low engine speed, and are generally driven more rapidly than necessary (resulting in a waste of power) at high engine speed.

There have been proposed variable speed belt drive systems for automobile accessories, comprising a speed-responsive variable pitch driven pulley on the accessory shaft (output shaft), which is driven by a belt trained around the driven pulley and around a variable pitch drive pulley on the engine crank shaft ( input shaft ).

In these previously proposed drive systems, the speed of the output shaft is affected by the torque on the output shaft, and the speed will drop as the torque on the output shaft increases. This reduction in speed is undesirable. For example, on very hot summer days, it is desirable to use the full available cooling effect of the air conditioner for the comfort of the occupants of the vehicle. Under such conditions, which represent a high torque requirement of the accessories, it is desirable to retain at least a substantially constant speed of the accessories rather than that permitted by the previously proposed variable ratio drive systems, without an increase in engine speed, which, of course, is dictated by driving conditions.

There have also been proposed variable speed drive systems which are speed-responsive and torque-responsive. A speed-responsive mechanism and an associated variable pitch drive pulley are positioned on the input shaft of the belt drive, and a torque-responsive mechanism and a cooperating variable pitch pulley are mounted on the output shaft. The speed of the output shaft relative to the input shaft increases as the input speed increases.

According to the present invention, there is provided a variable speed belt drive system comprising a variable pitch diameter pulley mounted on an input shaft, a variable pitch diameter pulley mounted on an output shaft, an endless belt received on said pulleys, torque-responsive means connected to the pulley on the input shaft to increase the effective pitch diameter of the input pulley in response to an increase in load on said output pulley and speed-responsive means connected to the pulley on the output shaft to increase the effective pitch diameter of the output pulley as the speed of the output shaft increases.

Further according to the present invention, there is provided a method of driving an output shaft of a variable speed belt drive system which includes an input shaft speed-responsive means and torque-responsive means, at variable speeds in response to both the speed of and torque load acting on the output shaft, said method comprising driving the input shaft at a speed which drives the output shaft below a speed-responsive shifting speed at which time the output shaft is driven at a low speed ratio of input shaft relative to output shaft, increasing the speed of the input shaft for driving the output shaft from a speed below said shifting speed above said shifting speed for shifting the output shaft speed from said low speed ratio to a high speed ratio when under a normal range of torque loads, and at least retaining the speed of the output shaft in response to a torque load on the output shaft that is above the normal range of torque loads.

An embodiment of the invention will now be described, by way of example only, with reference to the accompanying diagrammatic drawings, in which:

Figure 1 is a perspective view of a variable speed belt drive system in accordance with the present invention mounted on the engine of a vehicle for driving several accessories on the vehicle;

Figure 2 is an enlarged vertical section taken on line 2-2 of Figure 1;

- 4 -

Figure 3 is an enlarged plan view in the direction of arrows 3-3 of Figure 2 and illustrating a part of a torque-responsive mechanism in a condition to drive the output shaft at its fastest speed ;

Figure 3A is a plan view similar to Figure 3 but to a smaller scale and showing the torque-responsive mechanism in a condition to drive the output shaft at its slowest speed relative to the input shaft;

Figure 4 is an enlarged exploded perspective view showing the torque-responsive mechanism in the condition illustrated in Figure 3;

Figure 5A is a gtaph illustrating the relationship of the engine crank shaft (input shaft) speed and accessory shaft (output shaft) speed, wherein instantaneous shifting is assumed of a device having a speed-responsive pulley on the input shaft, rather than on the output shaft;

Figure 5B is a graph similar to Figure 5A but which more accurately represents the actual low torque and high torque shifting curve of the device;

Figure 5C is a graph similar to Figure 5A but illustrating the speed relationship of the drive system assuming instantaneous shifting; and

Figure 5D is a graph similar to Figure 5C but which more accurately illustrates the actual shifting curve of the drive system.

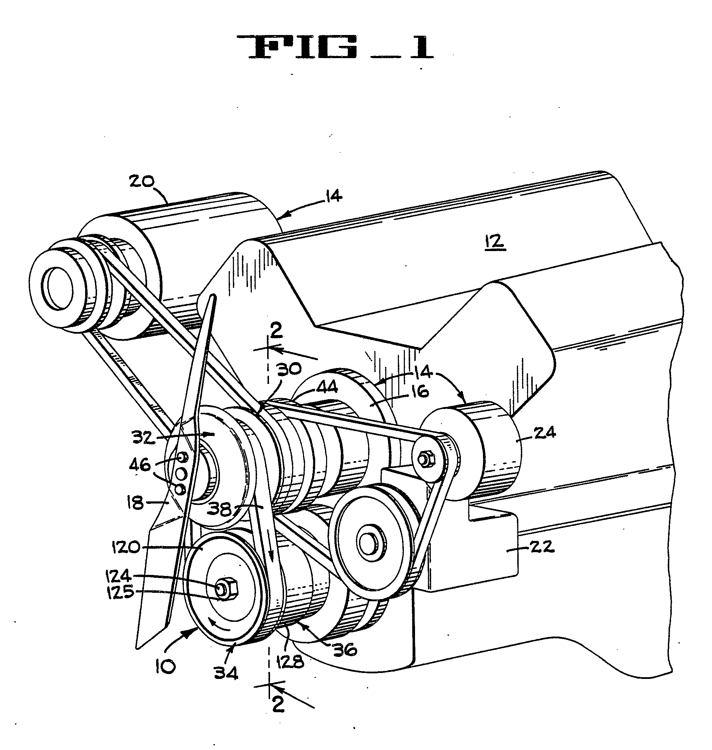

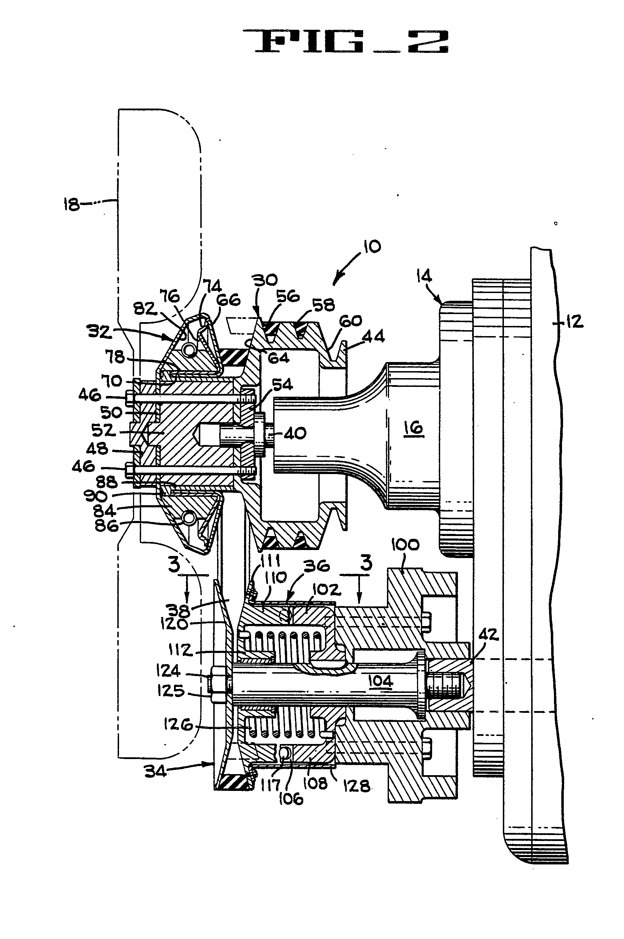

The preferred embodiment of the variable speed drive system 10 (Figures 1 and 2) is illustrated as being connected to an engine 12 of a motor vehicle for the purpose of driving one or more of the usual and conventional engine accessories 14. The illustrated accessories 14 include a water pump 16 and a fan 18 for the engine cooling system; an air compressor 20 for the air conditioning system; a hydraulic pump 22 for the power steering; and an alternator 24 for the vehicle electrical system.

The variable speed belt drive system 10 comprises an infinitely variable pitch pulley 30 which incorporates a speed-responsive mechanism 32; an infinitely variable pitch pulley 34 which incorporates a torque-responsive mechanism 36; and an endless belt 38 trained around both pulleys 30, 34 in such a way that an increase in the effective pitch diameter of one of the pulleys will result in a decrease in the effective pitch diameter of the other pulley.

The pulley 30 and speed-responsive mechanism 32 are secured to an output shaft 40 (Figure 2) which is illustrated as the water pump shaft, while the pulley 34 and torque-responsive mechanism 36 are connected to an input shaft 42 which is illustrated as the crank shaft of the engine 12.

The variable pitch pulley 30, the speed-responsive mechanism 32, and a multi-grooved pulley 44 are assembled together and to the output shaft 40 by capscrews 46. The capscrews extend through holes in the hub of the fan 18, a cap 48, a weight guide plate 50, a cylindrical block 52, and the flange of the pulley 44. The cap screws 46 are threaded into a hub 54 that is rigidly secured to the output shaft 40.

The pulley 44 includes a plurality of fixed pitch V-belt grooves 56, 58 and 60 for driving other accessories.

The pulley 44 also defines one belt engaging flange 64 of the variable pitch pulley 30.    The other flange 66 of the pulley 30 is provided with a cylindrical mounting foot 70 and an inclined belt contacting portion.    The flange 66 is backed by a similarly  shaped weight guide plate 74 having a first inclined weight guiding surface 76 and a cylindrical mounting portion 78  supported on the foot 70. The centrally apertured, generally disc shaped weight guide plate 50 has a portion which defines a second inclined weight guiding surface 82.    A plurality of arcuate weights 84 is  slidably received between the weight guiding surfaces 76 and 82 and is  urged toward the axis of rotation of the output shaft 40 by an endless coil spring 86.    A sleeve 88 having an annular abutment stop 90 thereon slidably receives the mounting foot 70 of the pulley flange 66.

Thus, when the output shaft 40 is stationary or is rotating at a slow speed, the weights 84 remain in their innermost positions as illustrated in Figure 2 thereby maintaining the variable pitch pulley 30 in its low pitch position also as illustrated in Figure 2.  However, when the output shaft 40 is rotating at high speed, centrifugal force will move the weights 84 outwardly against the urging of the spring 86 thereby shifting the pulley flange 66 and the weight guide plage 74 to the right (Figure 2) toward the belt engaging flange 64. This action shifts the pulley 30 into its high pitch position thereby moving the belt 38 radially outward.

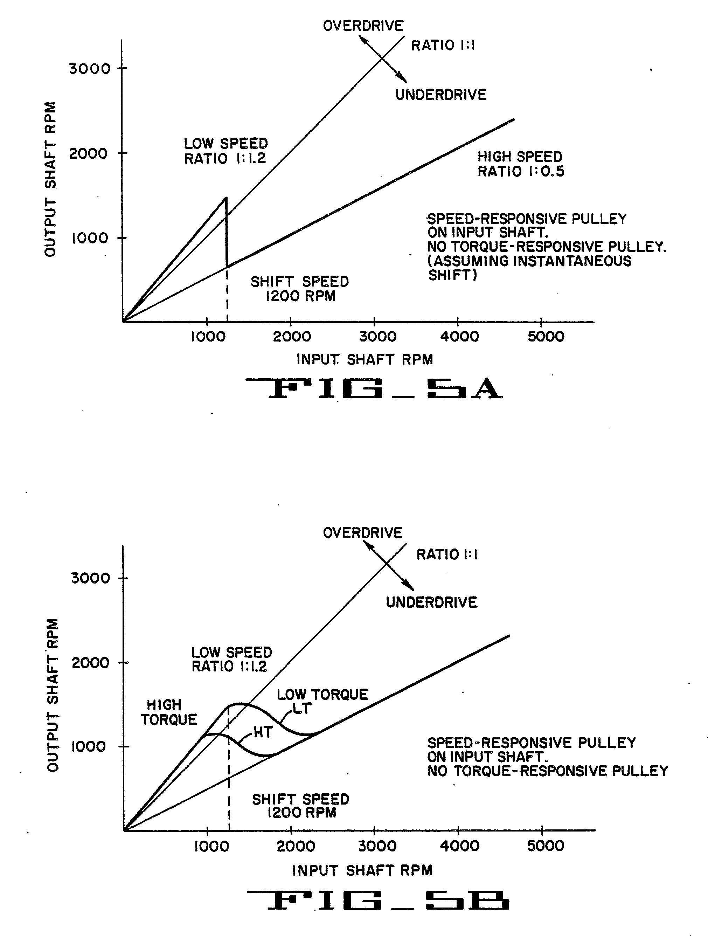

The infinitely variable pitch pulley 34 and torque-responsive mechanism 36 comprises a mounting hub 100 that is rigidly secured in fixed axial position to the input shaft 42 (engine crank shaft) for rotation therewith. An annular cam housing 102 is bolted to the hub 100 and is keyed to a shouldered steel shaft 104 that is screwed into and is concentric with the input shaft 42. The housing 102 also includes a plurality of ramps or camming surfaces 106 (Figures 2 - 4) formed on the ends of a plurality of evenly spaced legs 108 that are concentric with the axis of the input shaft 42.

A second housing 110 defines an axially movable flange 111 of the variable pitch pulley 34 and includes a tubular hub 112 that is journalled for rotation and axial sliding movement on the stub shaft 104. A plurality of camming surfaces 116 are supported on the housing 110 and are equal in number and complementary to the camming surfaces 106. Low friction nylon inserts 117 are preferably secured to the cam surfaces 106 for reducing frictional resistance to rotation of the camming surfaces 116 relative to the complementary surfaces 106.

An annular flange 120 defines the other half of the variable pitch pulley 34 and includes an inclined belt contacting surface that is complementary to the surface of flange 111. The flange 120 is centrally apertured to receive a threaded end portion 124 of the stub shaft 104, which end portion receives a nut 125 thereby rigidly securing the flange to the shafts 104 and 42 for rotation therewith.

A combination torsion and compression spring 126 has one end secured to the cam housing 102 and the other end secured to the second housing 110. The torsional force of the spring 126 urges the axially movable half of the pulley 34 in a direction opposite to the direction of movement of the input shaft 42. In the illustrated embodiment, the input shaft 42 rotates in a clockwise direction when viewed from the front of the engine while the spring 126 torsionally urges the movable flange 111 in a counter-clockwise direction. Thus, the cooperating cam surfaces 106 and 116 are angled so that counter-clockwise movement of the axially movable flange 111 relative to the flange 120 will cause the flange 111 to move axially toward the companion flange 120. In order to prevent dirt and debris from fouling the camming surfaces 106, 116, a flanged tubular guard 128 is secured to the housing 110 as illustrated in Figure 2.

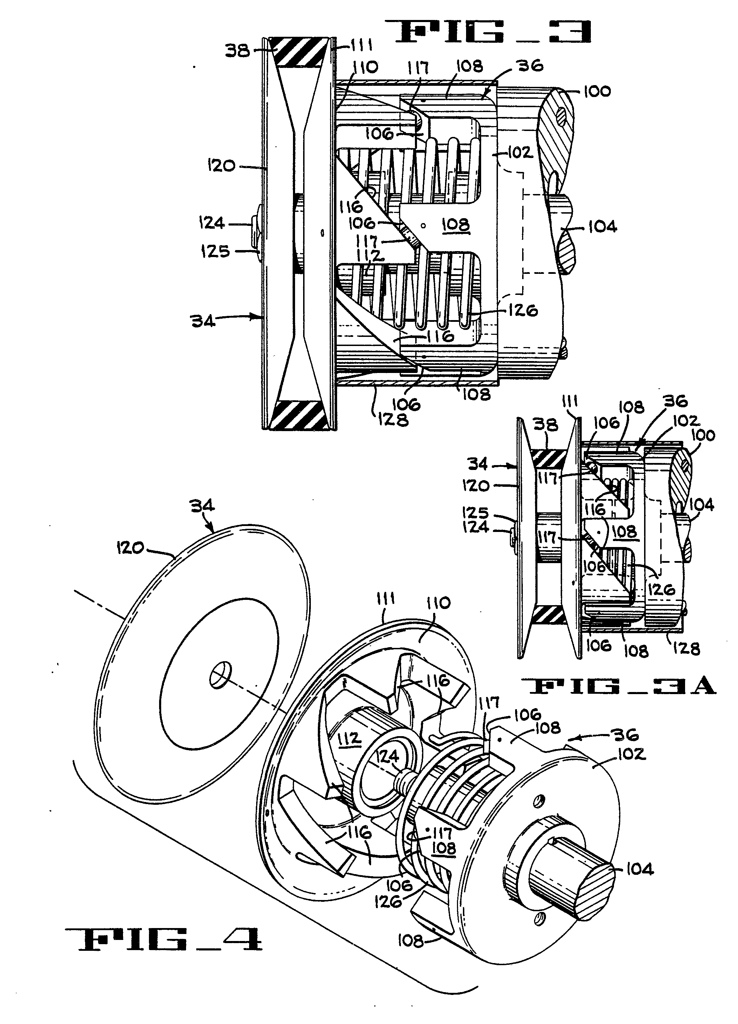

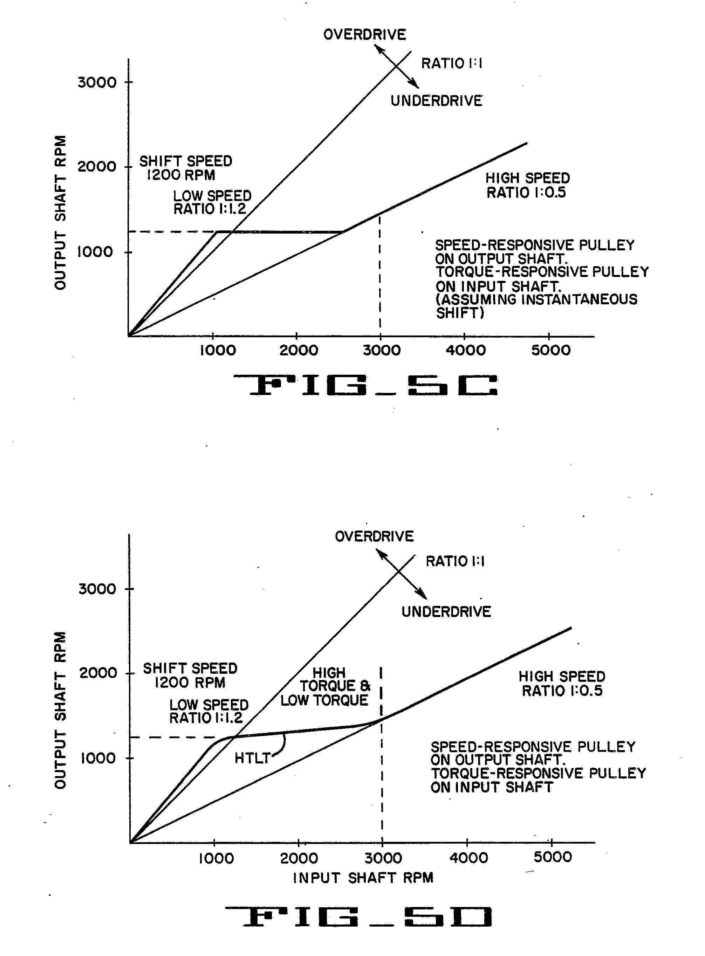

The operation of the torque-responsive mechanism 36 is dependent upon both the speed of the output shaft 40 and the torque load applied to the belt 38 by the accessories. When the engine 12 is stopped or idling, the components of the variable speed belt drive 10 assume the position illustrated in Figures 2 and 3. At this time the speed of the output shaft 40 is not sufficient to cause centrifugal force to move the weights 84 of the speed-responsive mechanism 32 outwardly from their illustrated positions. Thus, the belt 38 is positioned at its lowest pitch diameter in pulley 32 and in its highest pitch diameter in the pulley 34. This results in driving the accessories at the highest speed relative to the input shaft 42 which is desirable at low engine speeds. Such ratio of engine speed to accessory speed is termed the "low speed ratio" and is indicated as a 1 to 1.2 ratio in Figures 5C and 5D. A speed ratio in Figures 5C and 5D. A speed ratio below 1 to 1 may be referred to as an overdrive, and a speed ratio over 1 to 1 may be referred to as underdrive.

When the accessory torque load is normal and the engine drives the output shaft 40 at a high speed, i.e. a speed above shifting speed, the speed-responsive mechanism 32 on the output shaft 40 shifts the belt drive into the high speed ratio indicated as 1 to 0.5. Thus, after the shifting operation has been completed the engine accessories are driven at a slower speed relative to the input shaft speed than would have occurred if shifting had not taken place. The slower accessory speed is indicated in Figures 5C and 5D as being one-half of that had shifting not taken place. This is desirable since the horsepower requirements of the accessories is reduced at the lower accessory speed.

Shifting to the above high speed ratio of 1 to 0.5 is accomplished by the speed-responsive mechanism 32 which is mounted on and is responsive to output shaft speed, not input shaft speed. When the weights 84 move radially outward along the weight guiding surfaces 76 and 82, the surface 76 and belt guide flange 66 move to the right (Figure 2) thus forcing the belt 38 radially outward to its high pitch position illustrated in dotted lines in Figure 2.

- 10 -

As the belt moves outwardly on the driven pulley 30, the belt force overcomes the torsional and compressive forces of the spring 126, as well as the axial force exerted through the cams 106, 116, thereby moving the flange 111 from the Figure 3 to the Figure 3A position. The pull of the belt 38 against the flanges 111 and 120 is not excessive under normal torque loads, but is sufficient to cause the belt to rotate the flange 111 relative to the flange 120 in the same direction as that of the input pulley causing the compressive and torsional forces of the spring 126 to increase as the cam acting through surfaces 106, 116 controls the axial separation of the flange 111 relative to the flange 120. At this time the output shaft 40 and accessories are driven at the high speed ratio (Figure 5D) which ratio causes the accessories to be driven at a relatively slow speed.

In the event a heavier than normal torque load is applied to the belt drive 10 by the accessories, it is desirable to at least prevent a reduction in speed of the accessories in response to the increased torque load and independent of the input shaft speed which at this time is above the shift speed (Figure 5D). In other words, it is desirable that the belt 38 moves radially outward in the pulley 34 from the dotted line position (Figure 2) toward the solid line position a sufficient amount to maintain the speed curve illustrated in Figure 5D.

This motion is accomplished by the above normal torque acting through the belt 38 which overcomes at least a portion of the centrifugal and spring forces acting on the weights 84 of the speed-responsive
mechanism as mentioned above.   The high torque load
increases the axial forces exerted by the cams, and
therefore increases the frictional grip of the belt
against the pulley flange 111.   With the aid of the
increased compressive and torsional force of the spring,
the flange 111 is caused to rotate counterclockwise
relative to flange 120 and at the same time be guided
axially toward the flange 120 by the hub 112 on the
shaft 104.   Thus, a higher than normal torque load urges
the flange 111 from the Figure 3A position toward the
Figure 3 position when the output shaft is rotating
faster than the shift speed thereby at least maintaining
the accessory speed to accommodate the excessive load
on the accessories.

Without a torque responsive mechanism on the input
shaft, it would be necessary to provide an axial force
on the belt at all times adequate to grip the belt
without slipping when the accessories are under maximum
load, even though this load on the accessories would
occur only infrequently.

The addition of the torque responsive mechanism
minimizes belt wear because a constant maximum axial
force is not required.   Instead, the torque responsive
mechanism serves to match the axial force on the belt
to the instantaneous accessory load.

Another feature is the concept of making the shifting
speed of the speed-responsive mechanism 30, which mechanism
is on the output shaft 40, responsive to the speed of the
output shaft rather than the input shaft thereby preventing a momentary decrease in accessory speed.

It is believed that this concept will be best
explained with the aid of the graphs of Figures 5A-5D.
Figures 5A and 5C represent one example of a variable
speed belt drive with a speed-responsive pulley on the
input shaft and no torque-responsive pulley on the output
shaft. Figure 5A illustrates the speed relationship
if shifting occurred instantantously (which it does not)
to better illustrate the hesitation or momentary drop
in accessory speed during shifting. Figure 5B more
closely represents the actual speed relationship during
shifting of this prior art example. It should be noted
that shifting will occur at a higher accessory speed
if under low torque than if under high torque.

Figure 5C represents the speed relationship of the
variable speed belt drive of the present system if
shifting occurs instantaneously (which it does not),
while Figure 5D more closely represents the actual speed
relationship during shifting when the pulley on the input
shaft is torque-responsive.

It will be noted from Figures 5A and 5B that when
the speed-responsive mechanism is on the drive or input
shaft, that shifting from a low speed ratio (1 to 1.2)
to a high speed ratio (1 to 0.5) will actually cause a
drop in accessory speed during shifting which is undesirable because the accessories will not perform adequately
at this reduced speed.

In Figure 5B, the curve HT represents the relation
between output shaft speed and input shaft speed with
high torque on the output shaft; the curve LT represents
the relation between output shaft speed and input shaft
speed with low torque on the output shaft.

Figures 5C and 5D indicate that mounting the speed-sensitive mechanism 32 on the output shaft 40 and the torque-responsive mechanism 36 on the input shaft 42 does not cause a drop in accessory speed during shifting.  Accordingly, this arrangement provides a smooth speed transition to the accessories, thereby maintaining adequate performance throughout the operating speed range of the vehicle.

In Figure 5D, the curve HTLT represents the relationship between output shaft speed and input shaft speed with both high torque and low torque on the output shaft.

A comparison of Figures 5B and 5D shows that the torque-responsive pulley on the input shaft reduces the effect of variation in accessory torque on accessory speed.

From the foregoing description it is apparent that the infinitely variable belt drive system described, when used to drive vehicle accessories, is responsive to the accessory requirements.  The belt drive includes a variable pitch pulley and speed-responsive mechanism mounted on the output or accessory shaft for shifting the speed ratio from an initial low speed ratio to a high speed ratio in response to the output shaft reaching the shifting speed without a drop in accessory speed, the speed ratio being that of the input shaft relative to the output shaft.  The torque-responsive mechanism and variable pitch pulley on the input shaft responds to an accessory torque load above a normal torque load range to at least prevent a drop in speed of the accessories.

The belt drive system described herein differs from the previously proposed systems which use torque-responsive mechanisms in that the speed-responsive mechanism reduces the accessory speed relative to the engine speed as the speed of the output shaft increases. The accessory speed remains at substantially such reduced speed relative to the engine speed, despite an increase in torque on the output shaft.  In other words, the torque-responsive mechanism on the input shaft in the present system  serves to combat the tendency of increased torque on the output shaft to reduce the speed of the output shaft.

The variable speed belt drive system described has many applications but its preferred use is as an accessory drive for an automobile vehicle, as described.

- 1 -

CLAIMS

1.    A variable speed belt drive system comprising a variable pitch diameter pulley (34) mounted on an input shaft (42), a variable pitch diameter pulley (30) mounted on an output shaft (40), an endless belt (38) received on said pulleys (30, 34), torque-responsive means (36) connected to the pulley (34) on the input shaft (42) to increase the effective pitch diameter of the input pulley (34) in response to an increase in load on said output pulley (30), and speed-responsive means (32) connected to the pulley (30) on the output shaft (40) to increase the effective pitch diameter of the output pulley (30) as the speed of the output shaft (40) increases.

2.    A system as claimed in claim 1, wherein the system forms an accessory drive system of a motor vehicle, the input shaft (42) being connected to the engine (12) of the vehicle and the output shaft (40) being connected to an accessory.

3.    A system according to claim 1 or claim 2, wherein the torque-responsive means (36) comprises a spring (126) which acts in compression to urge the pulley flanges (111, 120) of the input pulley (34) together and which acts in torsion to resist relative rotation between the pulley flanges ( 111, 120 ).

4.     A system as claimed in any one of claims
1 to 3, wherein the speed-responsive means (32) comprises
weights (84) which are shifted by centrifugal force
to change the effective pitch diameter of the output
pulley (30).

5.     A system as claimed in any one of claims
1 to 4, wherein the speed-responsive means (32) is
connected to the output shaft (40) and is responsive
to an increase in speed of the output shaft (40)
above a predetermined shifting speed for reducing the
speed of the output shaft (40) relative to the speed
of the input shaft (42), and the torque-responsive
means (36) is  effective to at least partially
overcome the speed-responsive means (32) when the torque
load acting on the output shaft (40) increases above a
normal torque load and when the output shaft (40) is
driven at a speed above the shifting speed.

6.     A system as claimed in any one of claims
1 to 4, wherein the speed-responsive means (32) is
effective to overcome the normal position of the torque-
responsive  means     (36) to decrease the speed of the
output shaft (40) relative to the speed of the input
shaft (42) in response to an increase in speed of the
output shaft (40) above a predetermined shifting speed
and when the output shaft is subjected to a normal
torque load, and the torque-responsive means (36) is effective to partially overcome the speed-responsive means (32) when rotating at a speed above said shifting speed in response to increasing the torque load on the output shaft (40) above a normal torque load thereby precluding a drop in the speed of the output shaft (40) due to the higher torque loads.

7.     A system according to claim 1 or claim 2, wherein the torque-responsive means (36) comprises a first camming surface (106) rigidly secured to the input shaft (42), a second camming surface (116) mating with said first camming surface (106) and mounted for rotation with and for limited rotation relative to the input shaft (42) and being rigid with one of the flanges (111) of the input pulley (34), and a combination torsion spring and compression spring (126) connected for normally urging said one pulley flange (111) into close proximity to the other flange (120) and for torsionally preloading the said one pulley flange (111) in a direction opposite to the direction of rotation of the input shaft (42), the speed-responsive means (32) being effective to overcome the torque-responsive means (36) in response to the output shaft (40) being subjected to a normal torque load and being rotated at a speed in excess of a predetermined shifting speed at which time the first and second camming surfaces (106, 116) are effective to control rotative and axial movement of the said one pulley flange (111) relative to and away from the other pulley flange (120) against the urging of the compressive and torsional preload of the spring (126), the torque-responsive means (36) being effective to partially overcome the speed-responsive means (32) in response to the output shaft (40) being subjected to a higher than normal torque load and being rotated at a speed in excess of said shifting speed at which time the first and second camming surfaces (106, 116) are effective to control rotative and axial movement of the said one pulley flange (111) relative to and toward the other pulley flange (120) aided by the compressive and torsional forces applied by the spring (126) and the higher frictional forces between the belt (38) and the said one pulley flange (111).

8.      A method of driving an output shaft of a variable speed belt drive system which includes an input shaft (42), speed-responsive means (32) and torque-responsive means (36) at variable speeds in response to both the speed of and torque load acting on the output shaft (40), said method comprising driving the input shaft (42) at a speed which drives the output shaft (40) below a speed-responsive shifting speed at which time the output shaft (40) is driven at a low speed ratio of input shaft (42) relative to output shaft (40), increasing the speed of the input shaft (42) for driving the output shaft (40) from a speed below said output shaft (40) speed from said low speed ratio to a high speed ratio when under a normal range of torque loads, and at least retaining the speed of the output shaft (40) in response to a torque load on the output shaft (40) that is above the normal range of torque loads.

FIG _ 1

# FIG_2

0020005

**FIG_3**

**FIG_3A**

**FIG_4**

OVERDRIVE
RATIO I:I
UNDERDRIVE

OUTPUT SHAFT RPM

LOW SPEED
RATIO I:I.2

HIGH SPEED
RATIO I:0.5

SPEED-RESPONSIVE PULLEY
ON INPUT SHAFT.
NO TORQUE-RESPONSIVE PULLEY.
(ASSUMING INSTANTANEOUS
SHIFT)

SHIFT SPEED
1200 RPM

INPUT SHAFT RPM

FIG_5A

OVERDRIVE
RATIO I:I
UNDERDRIVE

OUTPUT SHAFT RPM

LOW SPEED
RATIO I:I.2

HIGH
TORQUE

LOW TORQUE
LT

HT

SPEED-RESPONSIVE PULLEY
ON INPUT SHAFT.
NO TORQUE-RESPONSIVE PULLEY

SHIFT SPEED
1200 RPM

INPUT SHAFT RPM

FIG_5B

FIG_5C

FIG_5D

## DOCUMENTS CONSIDERED TO BE RELEVANT

| Category | Citation of document with indication, where appropriate, of relevant passages | Relevant to claim |
|---|---|---|
| X | <u>CH - A - 299 013</u> (REIMERS)<br><br>* Page 3, lines 17-75; figure 2 * | 1,2,4<br>7 |
| A | <u>US - A - 2 909 071</u> (SMYTH) | 1 |
| A | <u>US - A - 2 678 566</u> (OEHRLI) | 1 |
| A | <u>US - A - 3 981 205</u> (AVRAMIDIS) | 1 |
| A | <u>FR - A - 1 148 087</u> (JLO) | 1 |
| A | <u>FR - A - 1 567 645</u> (DAIMLER-BENZ) | 1 |

**CLASSIFICATION OF THE APPLICATION (Int. Cl. ³)**

F 16 H 11/06
F 01 P 7/04

**TECHNICAL FIELDS SEARCHED (Int.Cl. ³)**

F 16 H 11/00
F 01 P 7/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 13.08.1980 | FLORES |

EPO Form 1503.1   06.78